# EUROPEAN PATENT APPLICATION

(11) **EP 4 620 808 A1**
(43) Date of publication of application: **24.09.2025**
(21) Application number: 25164899.4
(22) Date of filing: 20.03.2025
(51) Int. Cl.: B64C 13/28, B64D 45/00

(54) **SENSOR INTERFACE FOR CONTROL OF AN AIRCRAFT FLIGHT CONTROL SURFACE**

(30) Priority: 22.03.2024 US 202463568837 P
(71) Applicant: Eaton Intelligent Power Limited, D04 Y0C2 Dublin 4 (IE)
(72) Inventor: VANDERWEIDE, Derek Jon, Dublin 4, D04 Y0C2 (IE); KOTWICZ HERNICZEK, Logan Marie, Dublin 4, D04 Y0C2 (IE)
(74) Representative: Epping - Hermann - Fischer

(57) **Abstract**

The present disclosure relates to rotational sensing systems for use in controlling the positions of flight control surfaces. The rotational sensing systems are integrated with actuators used to drive pivotal movement of the flight control surfaces and are configured to ensure higher accuracy in sensing angle changes and/or lack of angle changes of the flight control surfaces.

## Description

### Cross Reference To Related Application

This application claims the benefit of and priority to U.S. Provisional Application No. 63/568,837, filed March 22, 2024, which applications is hereby incorporated herein by reference. To the extent appropriate, a claim of priority is made to the above-disclosed application.

### Background

Sensor mounting assemblies may be utilized to assist in the control of actuating of a flight control surface, such as flap of aircraft. Sensor mounting assemblies may include a rotation position sensor to detect an angle of the flight control surface. For example, the rotation position sensor may be attached to a dedicated sensing mechanical linkage provided between an aircraft structure and a flight control surface. The mechanical linkage is separate from the actuator used to drive movement of the flight control surface. In some instances of operation, the flight control surface may move in a manner which is not about a primary axis of rotation of the flight control surface (e.g., movement that does not cause angle change of the flight control surface) and may cause the rotational position sensor to falsely indicate a change in rotational position of the flight control surface. Flight control systems use the sensed rotational positions of the flight control surfaces to monitor and control the positions of the flight control surfaces and the accuracy of rotational position readings relating to the flight control surfaces is increasingly becoming more important.

### Summary

One aspect of the present disclosure relates to rotational sensing systems for use in controlling the positions of flight control surfaces. The rotational sensing systems are configured to ensure higher accuracy in sensing angle changes or lack of angle changes of the flight control surfaces. In one example, the rotational sensing systems are configured to inhibit false angle change readings in cases in which flight control surfaces move in a manner not about primary axes of rotation of the flight control surfaces (e.g., move axially along the primary axes). In certain examples, rotational sensing systems in accordance with the principles of the present disclosure are configured to indicate an angle change of a flight control surface only when the flight control surface actually moves about its primary pivot axis.

Another aspect of the present disclosure relates a rotational sensing system for sensing and/or controlling the angular position of a flight control surface in which a rotational sensor is integrated with an actuator (e.g., integrated directly with) that drives pivotal/rotational movement of the flight control surface.

One aspect of the present disclosure relates to a flight control system including a flight control member which has a flight control surface. The flight control member is pivotally moveable about a flight control pivot axis to adjust a flight control angle of the flight control surface. The system further includes an actuator provided for pivoting the flight control member about the flight pivot axis to adjust the flight control angle of the flight control surface. The actuator includes a threaded shaft extending along a shaft axis and a drive for rotating the threaded shaft about the shaft axis. The actuator also includes a nut assembly having a nut threadingly mounted on the threaded shaft such that rotation of the threaded shaft about the shaft axis drives axial movement of the nut assembly along the shaft axis to drive pivotal movement of the flight control member about the flight control axis. The nut assembly also includes a flight control member actuator mount for coupling the flight control member to the nut assembly. The nut assembly further includes a pivot arrangement for allowing the flight control member actuator mount to pivot about a first pivot axis relative to the shaft axis as the actuator drives pivotal movement of the flight control member about the flight control axis. The system includes a rotation sensor for sensing a rotational position of the flight control member actuator mount about the first pivot axis. Additionally, the system may include a controller that interfaces with the rotation sensor. The controller is configured to determine the flight control angle of the flight control member based on the rotational position of the flight control member actuator mount sensed by the rotation sensor.

Another aspect of the present disclosure relates to a flight control system including a flight control member which has a flight control surface. The flight control member is pivotally moveable about a flight control pivot axis to adjust a flight control angle of the flight control surface. The system further includes an actuator for pivoting the flight control member about the flight control pivot axis to adjust the flight control angle of the flight control surface and a rotation sensor integrated with the actuator for sensing rotation corresponding to the actuator. The system also includes a controller that interfaces with the rotation sensor. The controller being configured to determine the flight control angle of the flight control member based on a rotational reading of the rotation sensor.

A variety of additional inventive aspects will be set forth in the description that follows. The inventive aspects can relate to individual features and to combinations of features. It is to be understood that both the foregoing general description and the following detailed description are exemplary and explanatory only and are not restrictive of the broad inventive concepts upon which the embodiments disclosed herein are based.

### Brief Description of the Drawings

FIG. 1 is a schematic view of a flight control system in accordance with the principles of the present disclosure;
FIG. 2 is a second schematic view of the flight control system of FIG. 1;
FIG. 3 is a perspective of an actuator of the flight control system of FIG. 1;
FIG. 4 is a top view of the actuator of the flight control system of FIG. 1;
FIG. 5 is a top view of a portion of the actuator of the flight control system of FIG. 1;
FIG. 6 is a perspective view of a nut assembly for the flight control system of FIG. 1;
FIG. 7 is a perspective view of a flight control member actuator mount of the actuator of the flight control system of FIG. 1;
FIG. 8 is a side view of the flight control member actuator mount of the actuator of the flight control system of FIG. 1;
FIG. 9 is a second side view of the flight control member actuator mount of the actuator of the flight control system of FIG. 1;
FIG. 10 is a top view of the flight control member actuator mount of the actuator of the flight control system of FIG. 1;
FIG. 11 is a bottom view of the flight control member actuator mount of the actuator of the flight control system of Fig 1;
FIG. 12 is a cross sectional view of a nut assembly and flight control member actuator mount of FIG. 7;
FIG. 13 is a second cross sectional view of a nut assembly and flight control member actuator mount of FIG. 7;
FIG. 14 is a third cross sectional view of a nut assembly and flight control member actuator mount of FIG. 7;
FIG. 15 is a perspective view of the nut for the flight control system of FIG. 1; and
FIG. 16 depicts another flight control system in accordance with the principles of the present disclosure.

### Detailed Description

Aspects of the present disclosure relate to an assembly for improving the accuracy of a rotational position sensor (e.g., an angular position sensor) used to determine the angular/rotational position of a pivotal member (a flight control member of an aircraft). In some instances, the assembly may include a rotation sensor coupled to a flight control member actuator mount of a nut assembly. In certain examples, the rotation sensor may be inserted into an end of a pivot arrangement of the nut assembly. In certain examples, the flight control member actuator mount rotates a flight control member based on movement of an actuator. In certain examples, a defined relationship or a definable relationship (e.g., a geometric relationship, a ratio, a mathematical relationship definable by an algorithm, a repeatable special relationship that can be defined/mapped as empirical data) exists between a rotational position of the flight control member actuator mount relative to the nut assembly and the flight control member relative to its pivot axis. In certain examples, a controller can use sensed data from the rotational position sensor indicating the rotational position of the flight control member actuator mount relative to the nut assembly in view of the defined or definable relationship to determine the rotational/angular position of the flight control member.

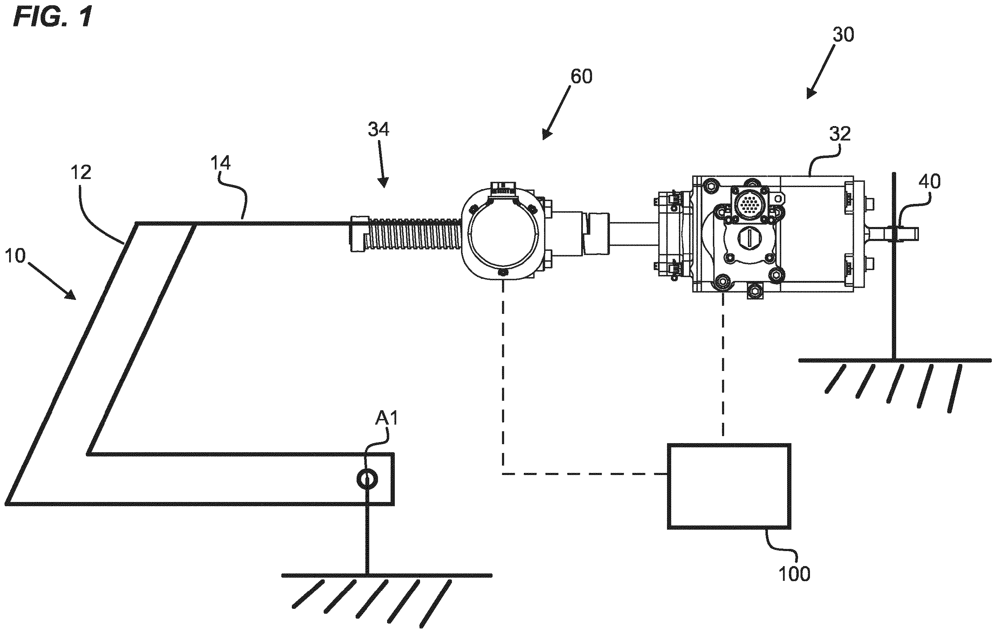

As shown in FIG. 1, one aspect of the present disclosure relates to a flight control system 1 including a flight control member 10. The flight control member 10 includes a flight control surface 12, and the flight control member 10 may be pivotally moveable about a flight control pivot axis A1 to adjust a flight control angle of the flight control surface 12. As a non-limiting example, the flight control member 10 having the flight control surface 12 may be a flight control member of a primary flight control system (e.g., ailerons, elevator, rudder) or secondary flight control system (e.g., flaps, spoilers, slats, tabs) of an aircraft. In a preferred example, the flight control member 10 is a wing flap of an aircraft.

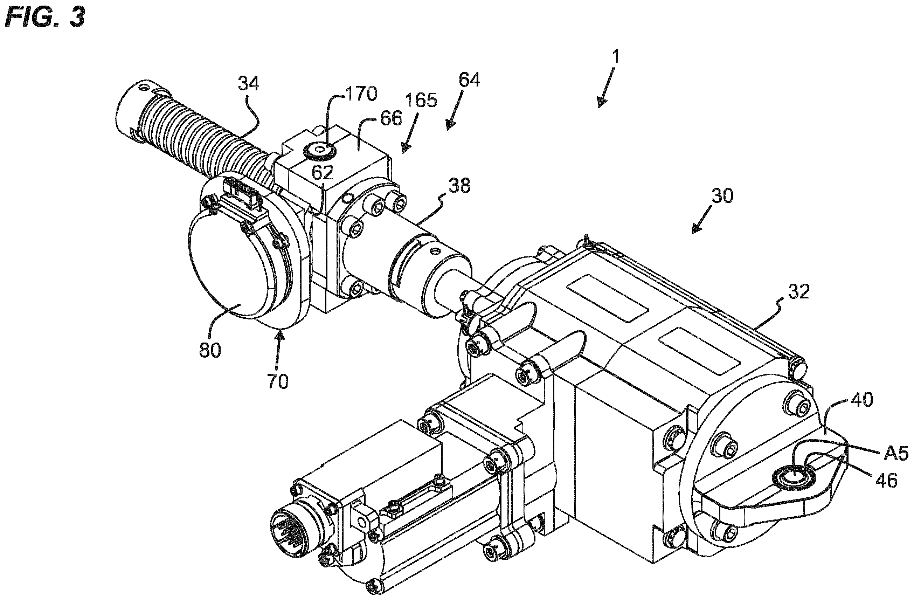

The system 1 also includes an actuator 30 for pivoting the flight control member 10 about the flight control pivot axis A1 to adjust the flight control angle of the flight control surface 12. The actuator 30 includes a threaded shaft 34 extending along a shaft axis A2 and a drive 32 for rotating the threaded shaft 34 about the shaft axis A2. The actuator 30 also includes a nut assembly 60 with a nut 62 threadingly mounted on the threaded shaft 34. Rotation of the threaded shaft 34 about the shaft axis A2 drives axial movement of the nut assembly 60 along the shaft axis A2 to drive pivotal movement of the flight control member 10 about the flight control axis A1. The nut assembly 60 also includes a flight control member actuator mount 70 (shown best in FIG. 3) for coupling the flight control member 10 to the nut assembly 60. The nut assembly 60 also includes a pivot arrangement 64 (shown in FIG. 3) for allowing the flight control member actuator mount 70 to pivot about a first pivot axis A3 relative to the shaft axis A2 as the actuator 30 drives pivotal movement of the flight control member 10 about the flight control axis. While the nut 62 is moveable along the shaft axis A2, the nut 62 does not rotate. Rather, the shaft 34 is rotated by the drive 32 (e.g., an electric motor, a hydraulic motor, etc.) of the actuator 30. The pivot arrangement 64 as carried axially with the nut 62 as the nut 62 is driven axially along the threaded shaft 34 and in one example allows for universal pivotal movement of the flight control member actuator mount 70 relative to the threaded shaft 34 and the nut 62. A coupler can couple a drive shaft of the drive 32 to the threaded shaft 34 such that torque for rotating the threaded shaft about the axis A2 can be transferred from the drive 32 to the threaded shaft 34. The flight control system 1 also includes a rotation sensor 80 integrated with the actuator 30 for sensing a rotational position of the flight control member actuator mount 70 about the first pivot axis A3 and a controller 100 (see FIG. 1) that interfaces with the rotation sensor 80. In one example, the rotation sensor 80 is a rotary encoder. The controller 100 may be configured to determine the flight control angle of the flight control member 10 about the flight control pivot axis A1 based on the rotational position of the flight control member actuator mount 70 about the first pivot axis A3 sensed by the rotation sensor 80.

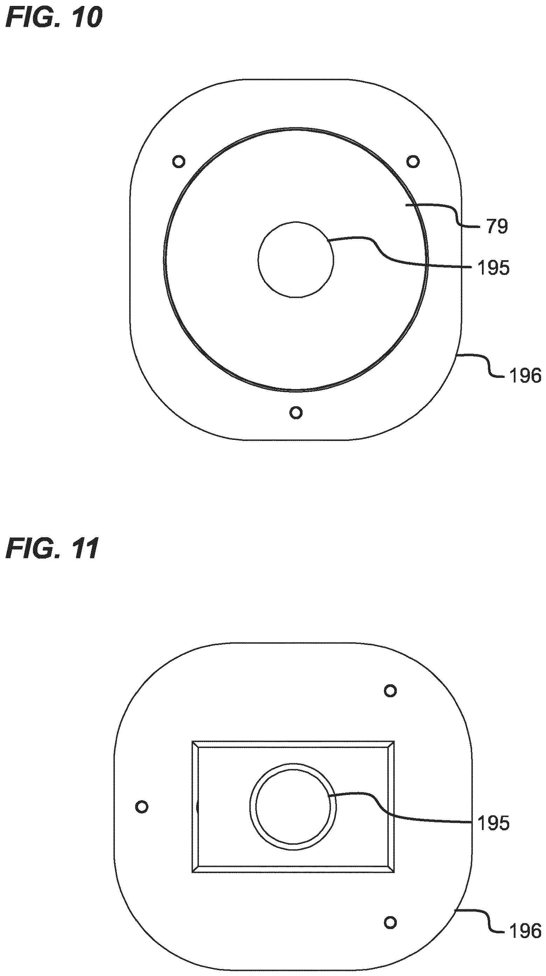

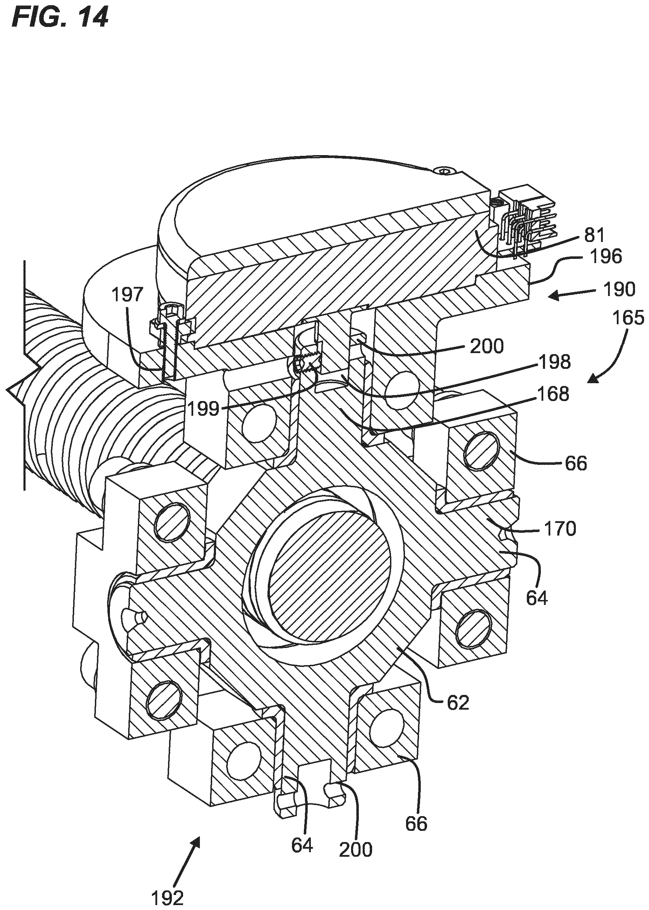

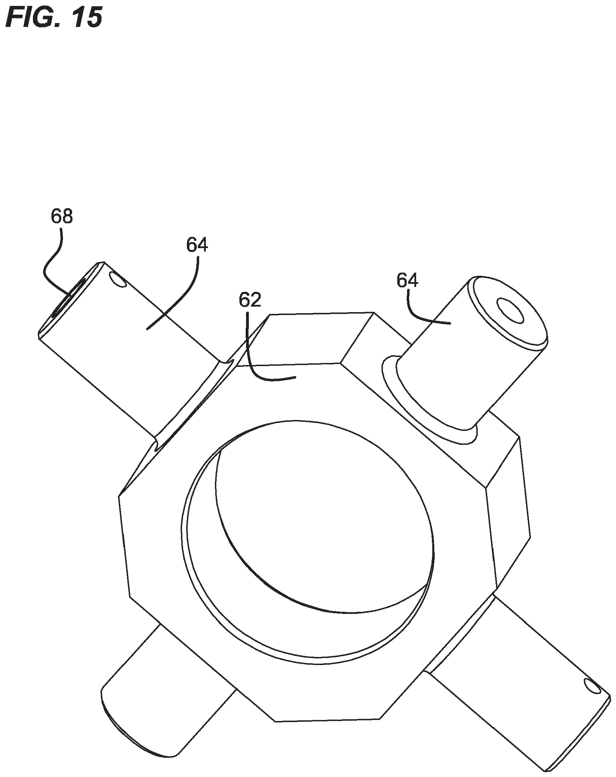

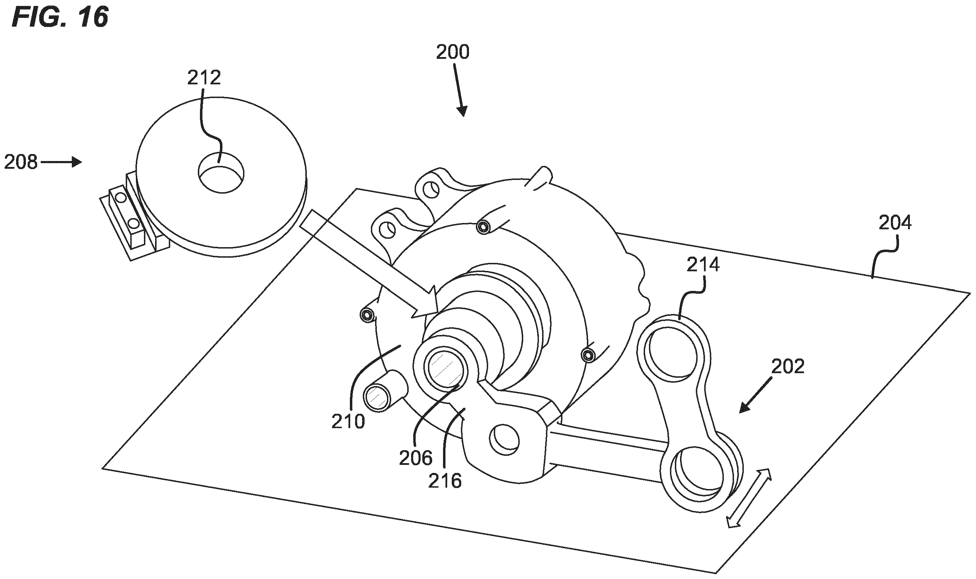

As depicted in the example of FIGS. 1-15, the actuator 30 includes a screw-drive. In other instances, systems in accordance with the principles of the present disclosure can include alternative types of actuators such as a rotary actuator 200 connected by a linkage component 202 to a flight control member 204 (e.g., see FIG. 16). The actuator 200 may include an output shaft 206 connected to the linkage component 202. The system can include a rotation sensor 208 that may be a rotary encoder or other sensor integrated with the actuator 200. The rotation sensor 208 can mount to a housing 210 of the actuator 200 and can include a sensing portion 212 positioned adjacent to the output shaft 206 (e.g., positioned around the output shaft such that the rotation sensor includes a sensing portion defining a hole that fits closely around the output shaft). An interior surface of the rotation sensor 208 detects the rotation of the output shaft 206 relative to the actuator housing 210. Sensed data from the rotation sensor 208 can be used to define a rotational position of the output shaft 206 and a controller can use such data to determine the flight control angle of the flight control member 204 about a flight control pivot axis of the flight control member 204 based on the rotational position of the output shaft 206. The linkage component 202 can include a plurality of links pivotally connected together and can connect to the flight control member 204 at end 214. End 216 can be secured to the output shaft 206 so that the link defining the end 216 rotates with the output shaft 206 about the axis of the output shaft 206 as the output shaft 206 is rotated by the actuator 200. Integration of the rotation sensor with the actuator (e.g., actuator 30 and actuator 200) enhances sensing accuracy by inhibiting false readings caused by movement of the flight control member in an orientation other than above its main pivot axis; and also provides a compact and value-added arrangement that eliminates the need for additional sensing linkages dedicated only for rotation sensing.

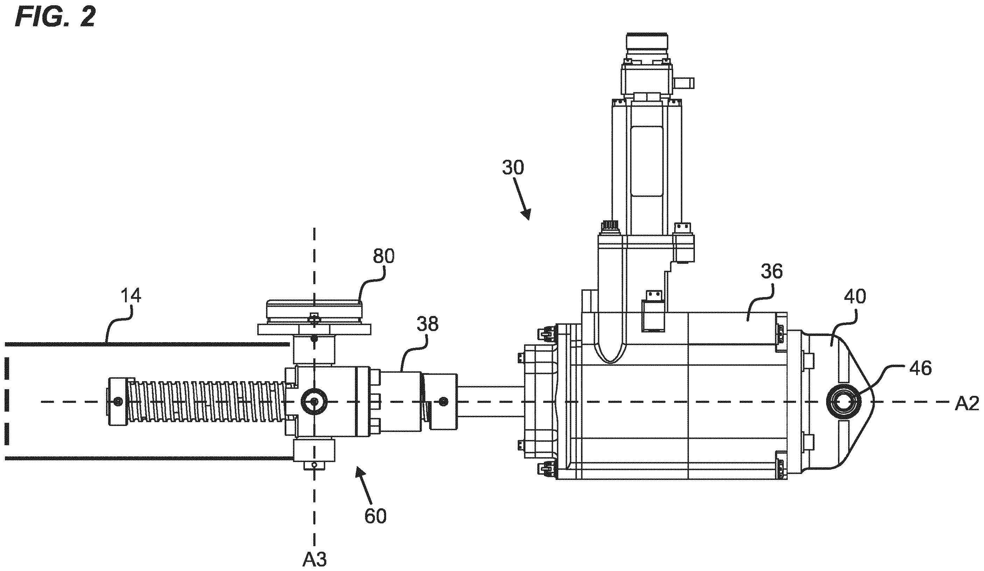

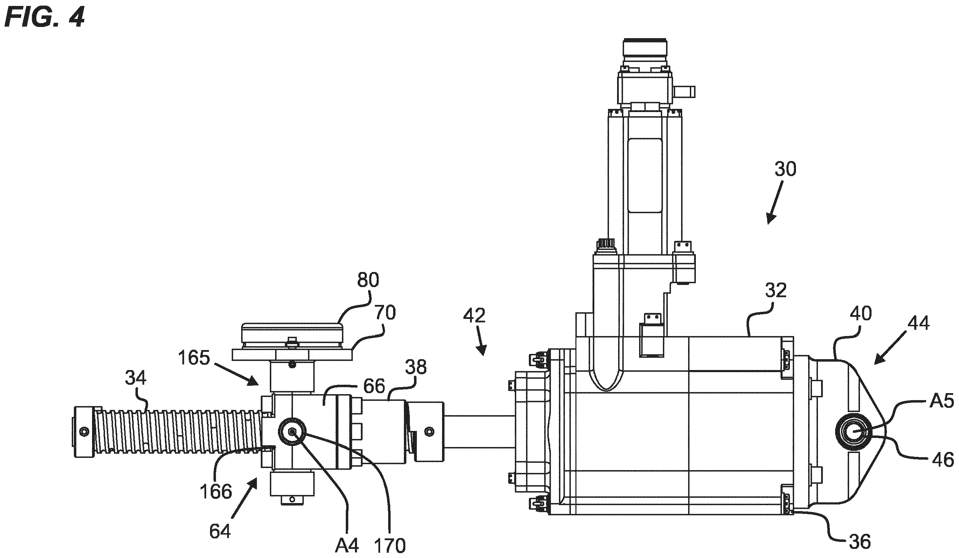

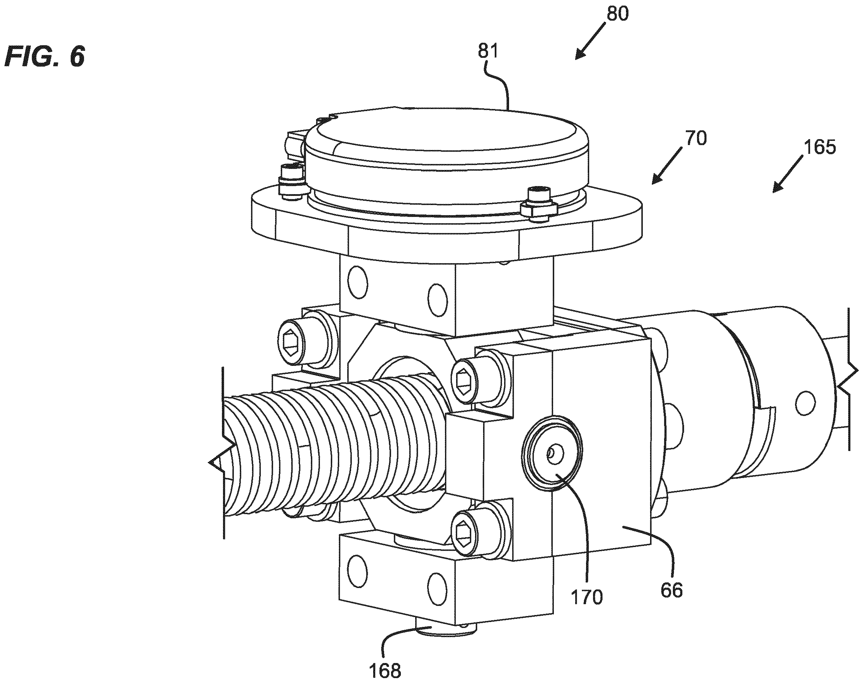

Referring to FIG. 2, the first pivot axis A3 is perpendicular with respect to the shaft axis A2. The pivot arrangement 64 (shown in FIG. 3) is also configured to allow the flight control member actuator mount 70 to pivot about a second pivot axis A4 (shown in FIG. 4) with respect to the shaft axis A2 as the actuator 30 drives pivotal movement of the flight control member 10 about the flight control pivot axis A1 via axial movement of the nut assembly 60. The pivot arrangement 64 includes a hub 165 (See FIG. 4) defining a central opening 166 (See FIG. 4) through which the threaded shaft 34 extends and which is enlarged relative to the threaded shaft 34 to allow for a limited range of pivotal movement relative to the threaded shaft 34. The hub 165 defines two trunnions with a first trunnion including first pivot pins 168 aligned along the first pivot axis A3 and a second trunnion including second pivot pins 170 (See FIG. 6) aligned along the second pivot axis A4. In the example pivot arrangement, the hub 165 includes the nut 62 which defines the central opening 166 and the trunnions. In some instances, the second pivot axis A4 may be perpendicular with respect to the shaft axis A2 and the first pivot axis A3. As such, when the nut assembly 60 is axially moved along the shaft axis A2, axial movement of the nut assembly 60 drives rotation of the flight control member 10 about the flight pivot axis A1 to adjust the flight control angle of the flight control surface 12. Load is transferred through the flight control member actuator mount 70 to the flight control member 10 as the nut assembly is driven axially along the threaded shaft 34 and the flight control member actuator mount 70 concurrently pivots relative to the threaded shaft 34 about the first and second pivot axes A3 and A4 to prevent binding during load transfer. The universal pivot configuration of the pivot arrangement 64 is advantageous in cases in which the shaft axis A2 and the flight control pivot axis A1 are arranged at complex angles with respect to each other.

Referring to FIG. 3 and FIG. 4, the threaded shaft 34 extends from a first side 42 of a motor housing of the drive 32 of the actuator 30. A base end 36 of the actuator 30 includes a pivot mount 38 including a bearing 46 for allowing the threaded shaft 34 to pivot at the base end 36 as the nut assembly 60 of the actuator 30 drives pivotal movement of the flight control member 10 about the flight control pivot axis A1. The actuator 30 may further include a support surface 40 extending from a second side 44 of the motor housing opposite the first side 42 of the motor housing. The pivotal movement permitted by the bearing 46 prevents binding.

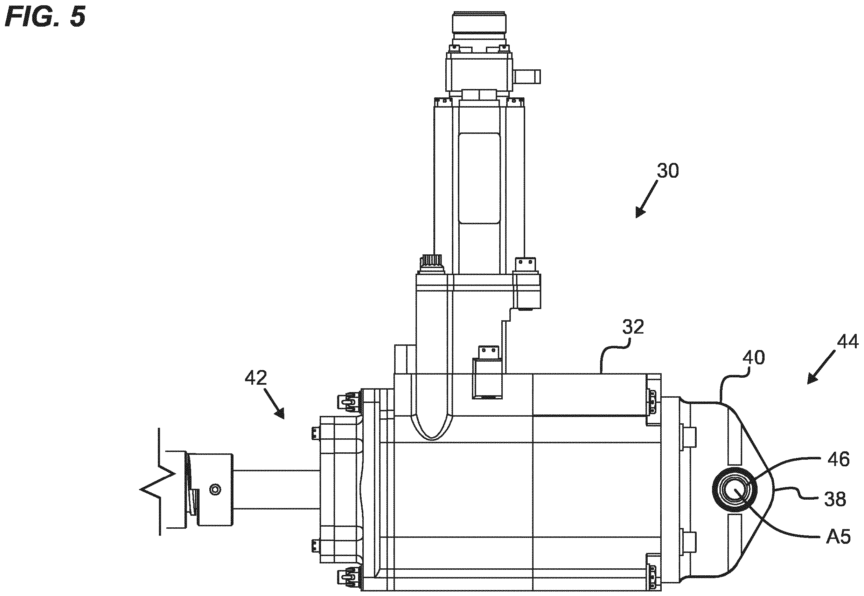

Referring to FIG. 5, the support surface 40 may support the bearing 46 for allowing pivotable movement of the actuator 30 about a support axis A5 when driving pivotal movement of the flight control member 10. The support pivot axis A5 may be generally parallel with first pivot axis A3 (See FIG. 2) of the pivot arrangement 64; but preferably allows for at least a limited range of universal pivotal movement at the base end 36 of the actuator 30. The support axis A5 can be defined by a pin that is connected to a frame of the aircraft (see FIG. 1). Similarly, pivot pins that define the flight control member pivot axis A1 can be connected to the frame of the aircraft (see FIG. 1). To prevent binding, the actuator 30 pivots at the pivot mount 38 as the nut assembly 60 is axially driven by the threaded shaft 34 to drive pivotal movement of the flight control member 10.

The nut assembly 60 may also include fixture plates 66 coupled on opposite sides of the nut 62. The second pivot pins 170 of the hub 165 are supported for rotation (e.g., by bearings such as bushings) within the fixture plates 66 such that the hub 165 is free to pivot about the second pivot axis A4 relative to the fixture plates 66 and the nut 62 coupled thereto. The first pivot pins 168 are supported for rotation (e.g., by bearings) within the flight control member actuator mount 70 such that the flight control member actuator mount 70 is free to pivot about the first pivot axis A3 relative to the hub 165 and the first pivot pins 168. In this way, the first pivot pins 168 and the second pivot pins 170 allow for universal pivotal movement of the flight control member actuator mount 70 relative to the fixture plates 66, the nut 62 and the threaded shaft 34.

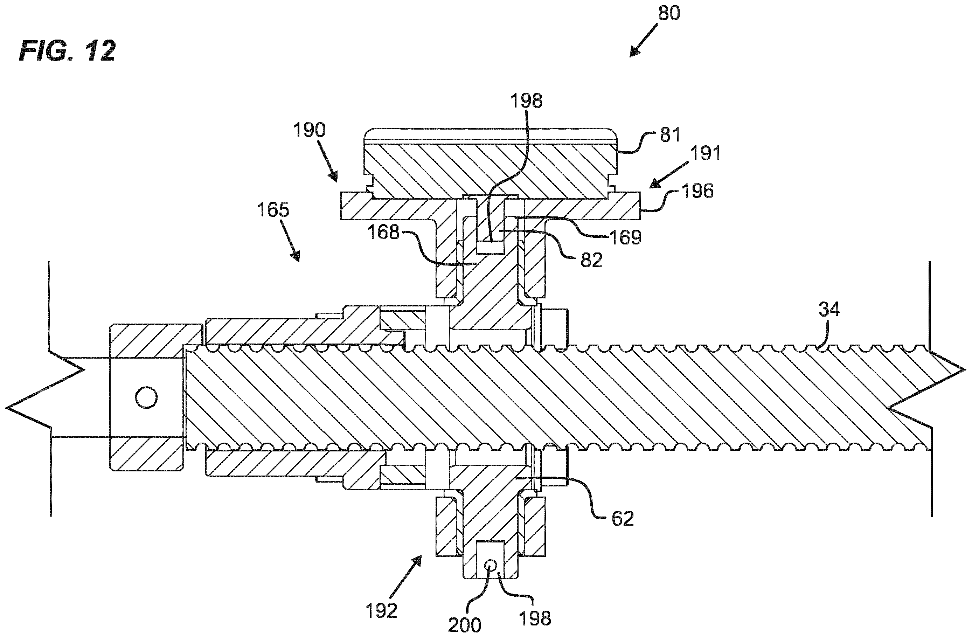

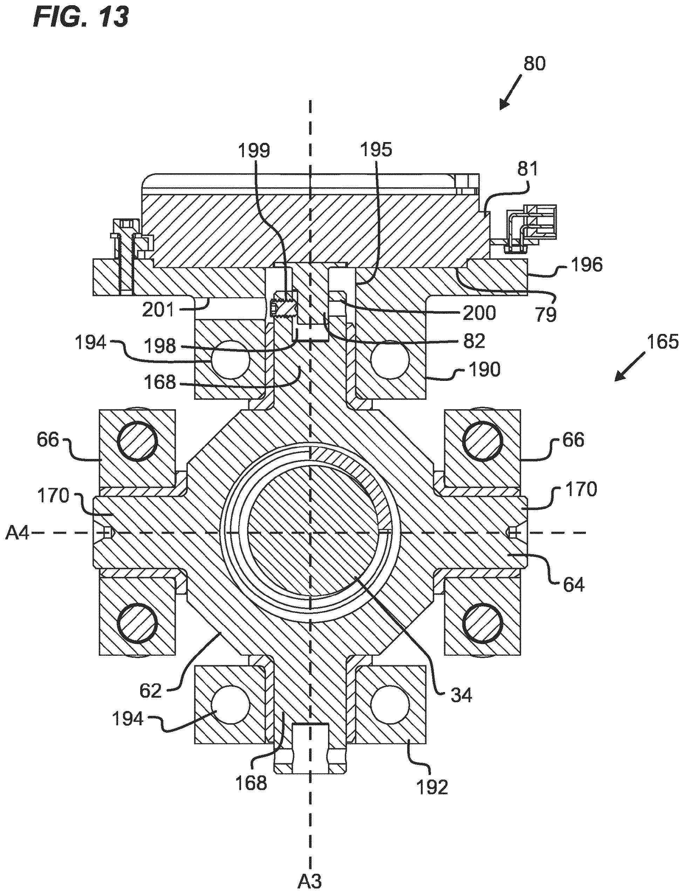

Referring to FIG. 6 and 12, the rotation sensor 80 can include a rotary encoder including a sensing arrangement (e.g. sensing circuitry) contained within a sensing housing 81. A sensor shaft 82 (shown in FIG. 12) projects from the sensor housing 81 along an axis of rotation A3 (shown in FIG. 12) of the sensor shaft 82. The sensing arrangement is configured to sense a rotational position of the sensor shaft 82 as the sensor shaft 82 rotates about the axis of rotation A3 (See FIG. 13) relative to the sensor housing 81. The sensing arrangement can interface with the controller 100 to provide the controller 100 with data which indicates the rotational position of the sensor shaft 82 at any given moment in time.

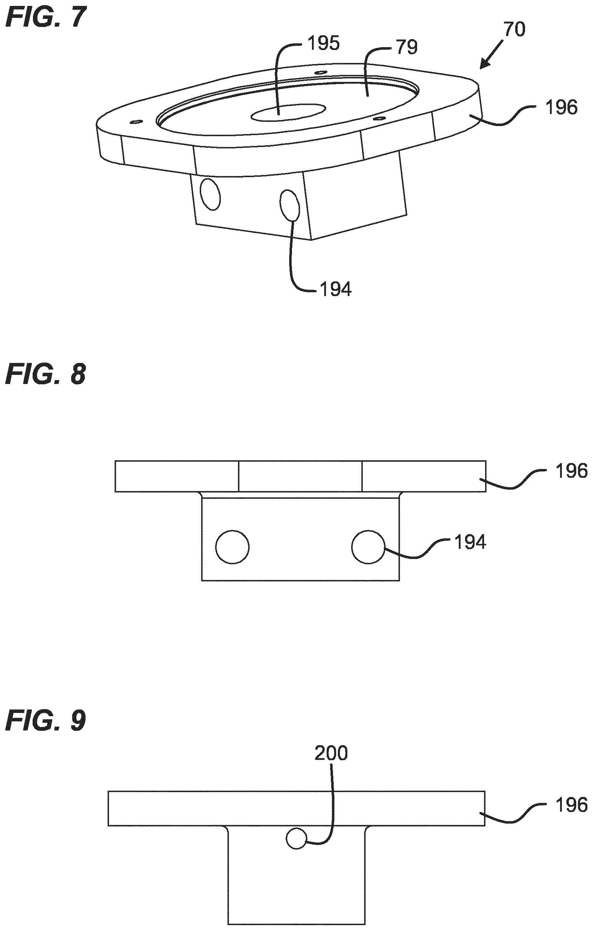

Referring to FIGS. 7-11, the flight control member actuator mount 70 is depicted including first and second mounting blocks 190, 192 (See FIG. 13) that mount on opposite sides of the hub 165 with each rotationally mounted on one of the first pivot pins 168. The mounting blocks 190, 192 are therefore free to pivot relative to the hub 165 about the first pivot axis A3 defined through the first pivot pins 168. The mounting blocks 190, 192 defines fastener openings 194 for attaching a connection arm 14 of the flight control member 10 to the flight control member actuator mount 70 (e.g., with fasteners such as bolts). To allow for rotational movement about the first pivot axis A3, the mounting blocks 190, 192 define through-openings 195 that receive the first pivot pins 168. The first mounting block 190 is adapted to accommodate mounting of the rotation sensor 80. For example, a sensor mounting flange 196 is provided at an outboard end 191 of the first mounting block 190. The sensor mounting flange 196 projects laterally outwardly from the main body of the first mounting block 190 and is rectangular in shape. The sensor housing 81 mounts to the sensor mounting flange 196. In some instances, the sensor mounting flange can include a recessed portion 79 which receives the sensor housing 81. For example, the sensor mounting flange 196 can include fastener openings 197 for allowing the sensor housing 81 to be attached to the sensor mounting flange 196. When attached to the sensor mounting flange 196, the sensor housing 81 is fixed relative to and is adapted to rotate about the first pivot axis A3 with the first mounting block 190 relative to the corresponding first pivot pin 168. When attached to the sensor mounting flange 196, the sensor shaft 82 extends axially into an axial opening 198 defined at the end 169 of the corresponding first pivot pin 168. The sensor shaft 82 is fixed relative to the first pivot pin 168 by a fastener such as a set screw 199 such that the sensor shaft 82 is prevented from rotating about the first pivot axis A3 relative to the first pivot pin 168. The set screw 199 is threaded into a side opening 200 of the first pivot pin 168 and access to the end of the set screw 199 is provided by a side opening 201 through the first mounting block 190. In other examples, the sensor shaft 82 may be fixed to the first pivot pin 168 by other means such as welding, press-fit, o an adhesive. In operation, the sensor housing 81 and the first mounting block 190 are configured to both rotate in unison relative to the first pivot pin 168 and the sensor shaft 82 as the nut assembly 60 is driven axially along the threaded shaft 34 as the actuator 30 is used to pivot the flight control member 10. The mounting of sensor 80 on the sensor mounting block 190 provides precise data representative of the rotational position of the flight control member 10 and is less susceptible to erroneous readings because the sensor 80 is decoupled from any motion of the flight control surface 12 which is not about the flight control pivot axis A1 which may occur during operation (e.g., motion of the flight control member in an orientation parallel to the axis A1 which may be caused by side loading of the flight control member). In certain examples, the screw and the motor are configured to lock the nut in axial position when the screw is not being rotated by the motor (e.g., the motor or other structure prevents unintended rotation of the screw to prevent unintended axial movement of the nut when the screw is not being driven by the motor).

Referring back to FIG. 1, the rotational sensor 80 is in communication with the controller 100 to provide data about the flight control angle of the flight control surface 12. The controller 100 is configured to determine the flight control angle of the flight control surface 12. Because the rotation of the flight control member 10 involves complex angles, the angular rotation of the flight control member actuator mount 70 does not exactly match the change in rotation of the flight control member 10. Therefore, when the actuator 30 is signaled by the controller 100 to move the flight control surface 12, the flight control member actuator mount 70 rotates at a different ratio from the flight control member 10. As such, the controller 100 may determine the flight control angle of the flight control surface 12 based on predetermined data stored within the controller 100 or based on other means such as an algorithm. The controller 100 may determine the flight control angle by comparing the rotation sensor output and stored information or algorithm within the memory of the controller 100. In some instances, the controller 100 may determine the flight control angle based on the position of the nut assembly 60 on the shaft and a rotational change of the flight control member actuator mount 70 detected by the rotation sensor 80. The rotational change of the flight control indicates to a specific rotational position of the flight control surface 12 by the predetermined data stored within the controller 100. As non-limiting examples, the controller 100 may include a look-up chart, a stored map, or other means for correlating the rotation sensor output to the specific rotational position of the flight control member 10 and the flight control angle. The controller 100 controls the movement of the flight control surface using closed-loop feedback.

The various examples described above are provided by way of illustration only and should not be construed to limit the scope of the present disclosure. Those skilled in the art will readily recognize various modifications and changes that may be made without following the examples and applications illustrated and described herein, and without departing from the true spirit and scope of the present disclosure.

### Aspects of Present Disclosure

Aspect 1. A flight control system comprising:
   a flight control member including a flight control surface, the flight control member being pivotally moveable about a flight control pivot axis to adjust a flight control angle of the flight control surface;
   an actuator for pivoting the flight control member about the flight control pivot axis to adjust the flight control angle of the flight control surface;
   a rotation sensor integrated with the actuator for sensing rotation corresponding to the actuator; and
   a controller that interfaces with the rotation sensor, the controller being configured to determine the flight control angle of the flight control member based on a rotational reading of the rotation sensor.
Aspect 2. The flight control system of aspect 1, wherein the actuator includes a screw-drive, the screw-drive including a nut assembly threadingly mounted on the threaded shaft.
Aspect 3. The flight control system of any one of aspects 1-2, wherein the rotation sensor senses rotation that occurs at the nut assembly as the actuator drives movement of the flight control member about the flight control pivot axis.
Aspect 4. The flight control system of any one of aspects 1-3, wherein the actuator is a rotary actuator including a drive shaft coupled to a linkage that drives rotation of the flight control member about the flight control pivot axis as the drive shaft is rotated.
Aspect 5. The flight control system of any one of aspects 1-4, wherein the rotation sensor measures a rotational position corresponding to the drive shaft.
Aspect 6. The flight control system of any one of aspects 1-5, wherein the actuator includes a threaded shaft extending along a shaft axis and a drive for rotating the threaded shaft about the shaft axis, the actuator also including a nut assembly including a nut threadingly mounted on the threaded shaft such that rotation of the threaded shaft about the shaft axis drives axial movement of the nut assembly along the shaft axis to drive pivotal movement of the flight control member about the flight control pivot axis, the nut assembly also including a flight control member actuator mount for coupling the flight control member to the nut assembly, the nut assembly further including a pivot arrangement for allowing the flight control member actuator mount to pivot about a first pivot axis relative to the shaft axis as the actuator drives pivotal movement of the flight control member about the flight control pivot axis.
Aspect 7. The flight control system of any one of aspects 1-6, wherein the rotation sensor is configured to sense a rotational position of the flight control member actuator mount about the first pivot axis.
Aspect 8. The flight control system of any one of aspects 1-7, wherein the first pivot axis is perpendicular with respect to the shaft axis, and wherein the pivot arrangement is also configured to allow the flight control member actuator mount to pivot about a second pivot axis with respect the shaft axis as the actuator drives pivotal movement of the flight control member about the flight control pivot axis, the second pivot axis being perpendicular with respect to the shaft axis and the first pivot axis.
Aspect 9. The flight control system of any one of aspects 1-8, wherein a base end of the actuator includes a pivot mount for allowing the threaded shaft to pivot at the base end as the nut assembly of the actuator drives pivotal movement of the flight control member about the flight control pivot axis.
Aspect 10. The flight control system of any one of aspects 1-9, wherein the controller correlates the rotation sensor output to an angle of the flight control surface.
Aspect 11. A flight control system comprising:
   a flight control member including a flight control surface, the flight control member being pivotally moveable about a flight control pivot axis to adjust a flight control angle of the flight control surface;
   an actuator for pivoting the flight control member about the flight control pivot axis to adjust the flight control angle of the flight control surface, the actuator including a threaded shaft extending along a shaft axis and a drive for rotating the threaded shaft about the shaft axis, the actuator also including a nut assembly including a nut threadingly mounted on the threaded shaft such that rotation of the threaded shaft about the shaft axis drives axial movement of the nut assembly along the shaft axis to drive pivotal movement of the flight control member about the flight control pivot axis, the nut assembly also including a flight control member actuator mount for coupling the flight control member to the nut assembly, the nut assembly further including a pivot arrangement for allowing the flight control member actuator mount to pivot about a first pivot axis relative to the shaft axis as the actuator drives pivotal movement of the flight control member about the flight control pivot axis;
   a rotation sensor for sensing a rotational position of the flight control member actuator mount about the first pivot axis; and
   a controller that interfaces with the rotation sensor, the controller being configured to determine the flight control angle of the flight control member based on the rotational position of the flight control member actuator mount sensed by the rotation sensor.
Aspect 12. The flight control system of aspect 11, wherein the first pivot axis is perpendicular with respect to the shaft axis, and wherein the pivot arrangement is also configured to allow the flight control member actuator mount to pivot about a second pivot axis with respect the shaft axis as the actuator drives pivotal movement of the flight control member about the flight control pivot axis, the second pivot axis being perpendicular with respect to the shaft axis and the first pivot axis.
Aspect 13. The flight control system of any one of aspects 11-12, wherein a base end of the actuator includes a pivot mount for allowing the threaded shaft to pivot at the base end as the nut assembly of the actuator drives pivotal movement of the flight control member about the flight control pivot axis.
Aspect 14. The flight control system of any one of aspects 11-13, wherein the flight control surface is a flap of an aircraft.
Aspect 15. The flight control system of any one of aspects 11-14, wherein the pivot arrangement includes a hub defining first pivot pins aligned along the first pivot axis and second pivot pins aligned along the second pivot axis.
Aspect 16. The flight control system of any one of aspects 11-15, wherein the flight control member actuator mount including a first mounting block and a second mounting block which mount on opposite sides of the hub with each rotationally mounted on one of the first pivot pins.
Aspect 17. The flight control system of any one of aspects 11-16, wherein the rotation sensor is mounted on the first mounting block.
Aspect 18. The flight control system of any one of aspects 11-17, wherein the first mounting block and the second mounting block each include a through-hole extending along the first pivot axis for receiving the first pivot pins.
Aspect 19. The flight control system of any one of aspects 11-18, wherein the first mounting block defines a sensor mounting flange provided at an outboard end of the first mounting block which receives the rotation sensor.
Aspect 20. The flight control system of any one of aspects 11-19, wherein the rotation sensor includes a sensor shaft extending axially into an axial opening defined at an end of the first pivot pin positioned within the first mounting block.
Aspect 21. The flight control system of any one of aspects 11-20, wherein the sensor shaft is fixed relative to the first pivot pin.
Aspect 22. The flight control system of any one of aspects 11-21, wherein the controller correlates the rotation sensor output to an angle of the flight control surface.
Aspect 23. The flight control system of any one of aspects 11-22, wherein the controller controls the movement of the flight control surface using closed-loop feedback.

## Claims

1. A flight control system comprising:
a flight control member 10 including a flight control surface (12), the flight control member (10) being pivotally moveable about a flight control pivot axis (A1) to adjust a flight control angle of the flight control surface (12);
an actuator (30) for pivoting the flight control member (10) about the flight control pivot axis (A1) to adjust the flight control angle of the flight control surface (12);
a rotation sensor (80) integrated with the actuator (30) for sensing rotation corresponding to the actuator (30); and
a controller (100) that interfaces with the rotation sensor (80), the controller (100) being configured to determine the flight control angle of the flight control member (10) based on a rotational reading of the rotation sensor (80).

2. The flight control system of claim 1, wherein the actuator (30) includes a screw-drive, the screw-drive including a nut assembly (60) threadingly mounted on a threaded shaft (34).

3. The flight control system of claim 2, wherein the rotation sensor (80) senses rotation that occurs at the nut assembly (60) as the actuator (30) drives movement of the flight control member (10) about the flight control pivot axis (A1).

4. The flight control system of claim 1, wherein the actuator (30) is a rotary actuator including a drive shaft (206) coupled to a linkage (202) that drives rotation of the flight control member (10) about the flight control pivot axis (A1) as the drive shaft (206) is rotated and wherein the rotation sensor (80) measures a rotational position corresponding to the drive shaft (206).

5. The flight control system of claim 1, wherein the actuator (30) includes a threaded shaft (34) extending along a shaft axis (A2) and a drive (32) for rotating the threaded shaft (34) about the shaft axis (A2), the actuator (30) also including a nut assembly (60) including a nut threadingly mounted on the threaded shaft (34) such that rotation of the threaded shaft (34) about the shaft axis (A2) drives axial movement of the nut assembly (60) along the shaft axis (A2) to drive pivotal movement of the flight control member (10) about the flight control pivot axis (A1), the nut assembly (60) also including a flight control member actuator mount (70) for coupling the flight control member (10) to the nut assembly (60), the nut assembly (60) further including a pivot arrangement (64) for allowing the flight control member actuator mount (70) to pivot about a first pivot axis (A3) relative to the shaft axis (A2) as the actuator (30) drives pivotal movement of the flight control member (10) about the flight control pivot axis (A1).

6. The flight control system of claim 5, wherein the rotation sensor (80) is configured to sense a rotational position of the flight control member actuator mount (70) about the first pivot axis (A3).

7. The flight control system of claim 5, wherein the first pivot axis (A3) is perpendicular with respect to the shaft axis (A2), and wherein the pivot arrangement (64) is also configured to allow the flight control member actuator mount (70) to pivot about a second pivot axis (A4) with respect the shaft axis (A2) as the actuator (30) drives pivotal movement of the flight control member (10) about the flight control pivot axis (A1), the second pivot axis (A4) being perpendicular with respect to the shaft axis (A2) and the first pivot axis (A3).

8. The flight control system of claim 5, wherein a base end (36) of the actuator (30) includes a pivot mount (38) for allowing the threaded shaft (34) to pivot at the base end (36) as the nut assembly (60) of the actuator (30) drives pivotal movement of the flight control member (10) about the flight control pivot axis (A1).

9. The flight control system of claim 1, wherein the controller (100) correlates a rotation sensor (80) output to an angle of the flight control surface (12), and wherein the controller (100) controls the movement of the flight control surface (12) using closed-loop feedback.

10. The flight control system of claim 1, wherein the flight control surface (12) is a flap of an aircraft.

11. The flight control system of claim 7, wherein the pivot arrangement (64) includes a hub (165) defining first pivot pins (168) aligned along the first pivot axis (A3) and second pivot pins (170) aligned along the second pivot axis (A4).

12. The flight control system of claim 11, wherein the flight control member actuator mount (70) including a first mounting block (190) and a second mounting block (192) which mount on opposite sides of the hub (165) with each rotationally mounted on one of the first pivot pins (168).

13. The flight control system of claim 12, wherein the rotation sensor (80) is mounted on the first mounting block (190) and wherein the first mounting block (190) and the second mounting block (192) each include a through-hole (195) extending along the first pivot axis (A3) for receiving the first pivot pins (168).

14. The flight control system of claim 13, wherein the first mounting block (190) defines a sensor mounting flange (196) provided at an outboard end (191) of the first mounting block (190) which receives the rotation sensor (80).

15. The flight control system of claim 14, wherein the rotation sensor (80) includes a sensor shaft (82) extending axially into an axial opening (198) defined at an end (161) of the first pivot pin (168) positioned within the first mounting block (190), and wherein the sensor shaft (82) is fixed relative to the first pivot pin (168).
